Europäisches Patentamt

European Patent Office

Office européen des brevets

(19)

(11) Publication number: **0 207 558 B1**

# EUROPEAN PATENT SPECIFICATION

(12)

(45) Date of publication of patent specification: **13.03.91**   (51) Int. Cl.⁵: **C08F 36/06, C08F 4/52**

(21) Application number: **86201076.6**

(22) Date of filing: **20.06.86**

(54) **Improved process for the polymerization of copolymerization of butadiene.**

(30) Priority: **01.07.85 IT 2137785**

(43) Date of publication of application:
**07.01.87 Bulletin 87/02**

(45) Publication of the grant of the patent:
**13.03.91 Bulletin 91/11**

(84) Designated Contracting States:
**BE DE FR GB NL**

(56) References cited:
**EP-A- 0 092 270**
**EP-A- 0 092 271**

(73) Proprietor: **ENICHEM ELASTOMERI S.p.A.**
**Via Ruggero Settimo 55**
**I-90139 Palermo(IT)**

(72) Inventor: **Gordini, Silvano**
**Via Cupello 4/C**
**I-20097 San Donato Milanese, Milan(IT)**
Inventor: **Carbonaro, Antonio**
**Via Marescalchi 1**
**I-20133 Milan(IT)**
Inventor: **Spina, Stanislao**
**Via Dante 35/C**
**I-20097 San Donato Milanese, Milan(IT)**

(74) Representative: **Roggero, Sergio et al**
**Ing. Barzanò & Zanardo Milano S.p.A. Via**
**Borgonuovo 10**
**I-20121 Milano(IT)**

EP 0 207 558 B1

## Description

This invention relates to a process for the preparation of homopolymers or copolymers having a high 1,4-cis content from butadiene and other conjugated diolefins.

Several prior art processes are known for producing butadiene having a high content of 1,4-cis units: these are particularly suitable for producing tyres and other elastomeric articles.

Catalyst system have been proposed, based on transition metals and rare-earth metals combined with alkyl and/or hydride derivatives of a number of metals: exemplary of such prior art are US-A-3 118 864, US-A-3 178 402, US-A-3 794 604, US-A-4 242 232, BE-A-559 676, BE-A-573 680 and BE-A-791 709.

The processes cited above are preferably carried out within a hydrocarbonaceous diluent medium.

Processes are also known for producing 1,4-cis polybutadiene by polymerization in bulk, in the absence of diluents, such as US-A-3 770 710 which teaches a two-step polymerization in bulk with the aid of a lithium-based catalyst, the monomer being evaporated to control the polymerization temperature.

EP-A-0 127 326 is a solvent- and diluent-free process using neodymium compounds, in combination with halogen compounds, hydroxyl-containing compounds and organometallic aluminium compounds, the polymerization being carried out continuously in a plug-flow reactor, or, as an alternative, streams of catalytic mixture and liquid monomer are concurrently fed to such a reactor.

Heat is removed, also in this case, by partial evaporation of the butadiene monomer, the ratio of butadiene to the catalyst being also concurrently controlled: the polymer is discharged continuously through the outlet end of the reactor.

The expected 1,4-cis polybutadiene is recovered by evaporating unreacted butadiene and the solvent, if any. The evaporation stage is carried out in a special extruder, but the Mooney viscosity of such butadiene polymer is not constant due to the poor homogeneousness of the system composed of the catalyst, the monomer and the polymer.

In addition, the molecular weight varies widely as the conversion rating is varied.

EP-A-0 092 270 is a closer approach in that it discloses a catalyst system comprising a compound of a Group IIIB metal, a non-halogenated aluminium alkyl, a hydroxylated compound and an inorganic compound containing ionisable Cl or Br or an inorganic halogenated compound.

EP-A-0 092 271 is a still closer approach teaching a catalyst system consisting of metals of the IIIB Group, a non-halogenated aluminium alkyl, a halogen derivative or a halide, and a hydroxyl-containing compound.

The problem, also with these last mentioned closer approaches, is that of the wide variations of the Mooney viscosity of the end polymer.

To solve the problems outlined above, the present invention proposes a process for the preparation of a homopolymer of butadiene, or a copolymer of butadiene with other conjugated diolefins, said homopolymer and said copolymers having a high content of l,4-cis units, using a catalytic system consisting of: (a) at least one neodymium compound selected from neodymium oxide, neodymium alkoxides, phenates and carboxylates or mixtures thereof with compounds of other rare-earth elements; (b) at least one hydroxyl-group- or carboxyl-group-containing organic compound and water; (c) at least one non-halogenated organometallic aluminium compound having the formula: $R^a R^b AlR^c$, wherein $R^a$ and $R^b$, equal to, or different from one another, are a saturated hydrocarbon radical, and $R^c$ is hydrogen or a hydrocarbon radical equal to, or different from $R^a$ and $R^b$, or a hydride of said non-halogenated organometallic aluminium compound, and (d) at least one halogenated compound selected from secondary alkyl halides, halides of organic acids, metal halides, organometallic halides, hydrogen halides and halogens, characterized in that it comprises the steps of initiating the polymerization reaction with an Al/Nd molar ratio of from 10:1 to 30:1, and adding a portion of component (c) during the polymerization reaction.

After the initial stage, the balance of the aluminium compound, (c), as hereinbefore defined, is added by increments until the Al/Nd molar ratio is from 20:1 to 80/1.

A fraction of the total amount of component (c) is mixed with the other components of the catalyst system, the balance being then added during progress of polymerization, either straight or diluted in an appropriate diluent.

The times and ways of introduction of the Al compound are commensurated to the duration of the polymerization run and the initial and final conditions, and also to the kind of processing conditions.

It is preferred to introduce the Al compound continuously, consistently with the reaction trend. Practically, the fraction of component (c) to be added during the reaction run is added as a steady flow, but it can be introduced in increments within a time range which is at least one half of the reaction time and which is situated in the central part of the overall reaction time.

Thus, for example, if the quantity of component (c) to be added during the reaction is a rather significant portion of the entire amount of (c), and the polymerization run lasts 2 hours in total, the addition of (c) is started at the 30th minute of the reaction time and is discontinued at the 90th minute of that time.

For a smaller quantity of additional (c) component, the addition can be made in two or three increments, even a single increment, but always in the central part of the reaction time.

The neodymium compounds are those hereinbefore specified. The (c) component, that is, the Al compound of the catalyst system is at least one non-halogenated aluminium compound or a hydride thereof and exemplary of such compounds are Al-triisobutyl, Al-triethyl , Al-diisobutyl hydride.

Exemplary of the component (b) are alcohols, phenols, carboxylic acids and water: preferred are butanol, 2-ethylhexanoic acid, naphthenic acids, and versatic acids.

Water acts as an activator and, as a rule, it is used in an amount of from 0,01:1 to 1:1 relative to the Al compound.

Conjugated diolefins, such as 1,3-butadiene, 1,3-pentadiene and isoprene can successfully be polymerized.

Copolymers of two or more of the monomers enumerated above having such a 1,4-cis microstructure and such a randomly distribution of the monomeric units are typical preferred examples: specifically the butadiene-isoprene copolymers and the butadiene-piperylene copolymers have crystallization temperatures which are in strict relationship with their composition.

Using an Al-alkyl compound on the one hand as a catalytic component, and, on the other hand, as a transfer agent, is a definite advantage: the mean molecular weight of the polymer, or copolymer as the case may be, is independent of the conversion rate, and so is the Mooney viscosity: moreover, savings of the catalyst component (c) are achieved in comparison with the prior art for a same conversion rating and for a same ML.

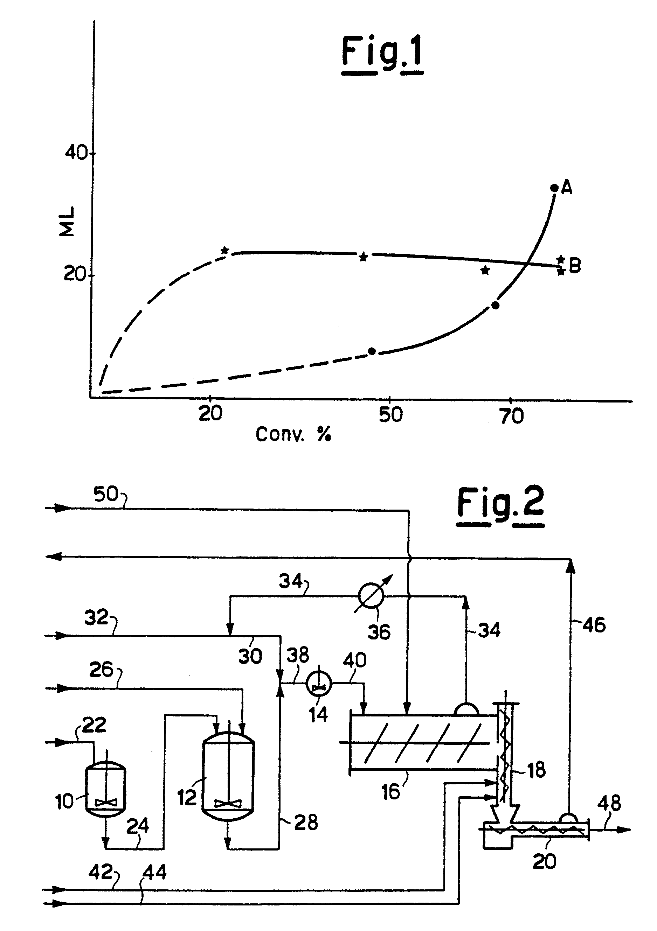

Reference is invited to the accompaying Fig.1 of the drawings, which plots the results of Examples 1-9 hereof: the abscissa is the percentage conversion, and the ordinate is the Mooney viscosity (ML).

The plot A shows the results of Examples 6-9 and is illustrative of the ML/conversion rating of the prior art. Plot B shows the results of Examples 1 to 4, according to the invention: it will be seen that ML remains substantially constant for a variation of the conversion rating from 20% to 80%.

The advantageous behaviour of tests B over tests A is evident: the Mooney viscosity, ML, remains constant as the conversion rating is varied and is lower at the end of the reaction: component (c) is saved and is a molecular weight adjuster, in addition to making possible savings of component (c): the latter, in fact, acts both as a catalyst component proper and as a regulator of the molecular weight.

Should polymerization, or copolymerization, be carried out in bulk, the catalytic system referred to above is prepared: preferably, it is blended with a small amount of the monomer(s) to be (co)polymerized.

The catalytic mixture and the liquid monomer, for example butadiene, optionally premixed, are fed, in an amount corresponding to from $10^4$ moles to $4.10^5$ moles of butadiene per mole of neodymium, batchwise, with stirring, to a conventional polymerization reactor: as an alternative, the blend is fed to a plug-flow reactor in a continuous stream under a constant pressure, the temperature being controlled by the evaporation of the butadiene monomer: a mixture is thus obtained, in which the polymer is from 25% to 90% by weight, whereafter an increment of the (c) component is fed along the reactor body, and 1,4-cis butadiene is separated and recovered.

When carrying out a continuous polymerization, a self-cleaning single- or twin-screw extruder can be used, the inlet temperature being maintained to at least 30°C, and the outlet temperature not higher than 130°C. The prefererred range is from 50°C to 100°C.

The continuous polymerization can be carried out, if desired, in several sequential steps in extruder-type reactors, and can also be carried out batchwise in a conventional reactor fitted with stirring means.

The medium for diluting the catalyst system in bulk polymerization can be an inert low-boiling hydrocarbon selected from among acyclics, cyclics, branched hydrocarbons: exemplary are butane, pentane, hexane, cyclohexane, heptane and mixtures thereof. The medium is used in an amount not higher than 5% by weight of the catalyst system and is conventionally removed from the finished polymerizate.

High-molecular hydrocarbons, or mixtures, are suitable catalyst carrier media in another embodiment: exemplary are paraffin oil , or the hydrocarbon oils commonly used as polybutadiene extenders.

Separation of the extenders is not imperative when their amount does not exceed 5% by weight of the polymer.

When (co)polymerization in bulk is carried out continuously, a stream of the catalytic mixture and one of liquid butadiene are fed independently: the ratio is, again, from $10^4$ mole to $4.10^5$ mole of butadiene per gram-atom of Nd: as aforesaid, the increments of component (c) are added along the reactor body.

The working pressure for polymerization is the equilibrium pressure for the temperature concerned: in practice, the pressure is from 3 bar to 18 bar absolute. In a time of residence from 10 min to 120 min the reactor produces a mixture containing from 25% to 90% by weight of polymer. Preferred residence times are from 10 min to 30 min and it is preferred to discharge from the reactor mixtures containing from 60% to 90% by weight of (co)polymer. Such mixture is placed in a blender and polymerization short-stoppers are added together with heat-stabilizers, preferably dissolved in butadiene.

The catalyst is deactivated with water, organic acids or higher aliphatic alcohols in an amount so as to have from 5 to 10 mol of deactivator per mol of catalyst system (sum of the mols of the individual components).

Nonacid short-stoppers are preferably supplemented with compounds of an alkaline nature, such as ammonia, amines, epoxides and organic salts of alkali metals.

The hydrocarbon solution is preferably supplemented with conventional antioxidants, such as sterically hindered phenols and phosphites, and with radical-capturing compounds such as secondary amines and epoxides, and the respective solutions can be properly blended with each other.

The mass is then fed to another heated solvent-removing extruder, in which the volatile substances are evaporated off: the temperature range is from 100°C to 180°C under pressures equal to or close to atmospheric pressure.

The treatment just described removes unreacted butadiene, solvents and excess water, if any is present: unreacted butadiene and solvents can be separated and recycled, if so desired.

Polybutadiene so produced has more than 97% by weight of 1,4-cis units and its Mooney viscosity (M.L.1+4, 100°C) is from 30 to more than 80.

The polybutadiene is gel-free and does not require any washing to remove residual catalyst.

The present process of polymerization in bulk is simple and convenient, is power-saving and is not environment-polluting: it can be used also for copolymerizing butadiene with other conjugated diolefins, such as isoprene and piperylene, and the copolymers thus obtained, again, exhibit a high content of 1,4-cis units.

When polymerization is made in solution, inert solvents can be used: they coincide with the catalyst diluents mentioned hereinbefore.

The polymerization is carried out within a temperature range of from 30°C to 130°C, the preferred range being from 50°C to 100°C.

If so, the reaction times are longer than those necessary for the polymerization in bulk and range, as a rule, from 20 minutes to a few hours.

Polymerization in solution can be carried out continuously or batchwise, using the appropriate machinery.

In any case, polymers and copolymers having a high 1,4-cis unit content are obtained.

The invention is better illustrated by the ensuing Examples.

EXAMPLES 1-9
—————— ——

Preparation of the catalyst
————————— —— ——— ———————

In a glass bottle with heavy walls, of about 100 ml of capacity, a magnetic anchor is introduced, then in the order:

```
Naphthenic acids (acidity number, A.N. 200)   19,8   g

Neodymium oxide (95% Nd₂O₃)                    4,04   g


Tert.butyl chloride (t.BuCl)                      4.25 ml

Vaseline oil (viscosity: 205.6 cst at

   20°, and 38.86 cst at 50°C              45      ml
```

are charged.

The bottle is capped with a crown cap provided with a bore and neoprene gasket, and is placed in a temperature-controlled bath kept at 80°C. The anchor is kept vigorously whirled by means of a rotary magnet. After 5 minutes, by means of a microsyringe, 80 $\mu$l of aqueous HCl (at 37% by weight) are introduced. The reaction at 80°C is continued over a total of 2 hours. The content of the bottle is then slowly transferred into a 1 l flask containing, under a $N_2$ atmosphere, a 1.1 molar solution of $(i.C_4H_9)_2AlH$ (371 ml).

The addition is carried out under stirring and at room temperature.

Twentyfour hours after the preparation, the catalytic solution so obtained is analytically titrated, showing the following molarities (moles/l): `

| Nd | 0.0520 |
|----|--------|
| Al | 0.9357 |
| Cl | 0.0806 |

Polymerization of butadiene in hexane solution

Eight identical reactors with glass body and head of stainless steel equipped with valves are used.

Into each reactor 360 ml of hexane and 80 9 of butadiene are charged under a $N_2$ atmosphere.

In all tests an equal amount (1.0 ml) has been used of the catalyst prepared as hereinabove disclosed, but in some of them additional $(i.C_4H_9)_2AlH$ has been added, in the amounts and at the times as shown in the following Table (the time t is measured from the introduction of the catalyst).

Also the duration of the individual tests (t') has been varied as shown, however maintaining a comparison criterion between the two 1-4 and 6-9 series.

## TABLE

| Test No. | $(i.C_4H_9)_2AlH$ added mmoles | t, min | End Al/Nd (molar) | Polymerization t' (min) | Conversion % | ML (1+4, 100°C) |
|------|--------|--------|--------|--------|--------|--------|
| 1 | == | == | 18 | 30 | 22.0 | 24 |
| 2 | 0.0312 | 30 | 24 | 60 | 45.5 | 23 |
| 3 | 0.0624 | 60 | 30 | 90 | 65.7 | 21 |
| 4 | 0.0936 | 90 | 36 | 120 | 78.2 | 23 |
| 5 | == | == | 18 | 120 | 67.5 | 71 |
| 6 | 0.0936 | 0 | 36 | 30 | 23.7 | < 5 |
| 7 | 0.0936 | 0 | 36 | 60 | 47.0 | 8 |
| 8 | 0.0936 | 0 | 36 | 90 | 67.5 | 15 |
| 9 | 0.0936 | 0 | 36 | 120 | 76.9 | 34 |

The polymerizations have been stopped at the times shown by means of the indroduction of 2 ml of ethanol diluted in 10 ml of hexane containing 1 g of dissolved antioxidizer AO 2246.

The polymer has been recovered from the solution by coagulating in an excess of ethanol, and drying the solid in vacuo at 40°C. The conversions and Mooney viscosisties of the products obtained are reported in the Table. It results from them how the portionwise addition of a portion of $(i.C_4H_9)_2AlH$ during the progress of the batch polymerization leads to Mooney values nearly constant with varying conversions (the

5

range covered is of from 22 to 78%: tests 1-4) and lower than those which can be obtained with the same amount of Al-alkyl used in the same reaction time, but introducing the aluminium compound all together at the beginning (see tests 4 and 9).

Examples 10-12

The catalyst is prepared in a way similar to the disclosure reported in Example 1, with the only variant of the amounts of t.BuCl and of $(i.C_4H_9)_2AlH$ used in the reaction, which are, respectively: 5.6 ml (instead of 4.25) and 412 ml of 1.1 molar solution in vaseline oil (instead of 371). The new solution gives the following analysis:

$$Nd \quad 0.0474 \quad moles/l$$

$$Al \quad 0.9480 \quad "$$

$$Cl \quad 0.0962 \quad "$$

Tests of mass polymerization of butadiene are sequentially carried out in a stainless steel reactor of 2 l of capacity, provided with mechanical stirrer and with system for the outer condensation and the recycle of the monomer evaporated during the constant-pressure reaction.

Into the reactor under a nitrogen atmosphere 500 g of butadiene, and after having isothermed at 60°C, 8.4 ml of the above disclosed catalytic solution (equivalent to 0.4 mmol of Nd) are charged, in addition to $(i.C_4H_9)_2AlH$ in the amounts and at the times (t) as shown in the following Table:

## TABLE

| Test No. | $(i.C_4H_9)_2AlH$ added | | End Al/Nd | Conversion % | ML (1+4, 100°C) |
|---|---|---|---|---|---|
| | mmoles | t, min | | | |
| 1 | 2.0 | 0 | 25 | 65.0 | 42 |
| 2 | 2.0 | 4 | 25 | 64.0 | 40.5 |
| 3 | 1.0+1.0 | 4+4 | 25 | 67.5 | 37 |

All the three tests are interrupted after 20 minutes from the introduction of the catalyst, making residual butadiene rapidly evaporate. During the polymerization the pressure is kept at 6.7 bars and the vapours formed are condensed and recycled to the reaction.

The solid product obtained in plunged and crumbled in an excess of ethanol containing 1% of AO 2246 to the only purpose of neutralizing the still active catalyst, and is then dried in vacuo and weighed.

The recorded conversions and Mooney viscosities are reported in the Table. The polymers result free from gel and with a cis titre comprised within the range of from 97.6 to 97.8%.

The comparison of ML values shows the better effect or regulation of molecular weights accomplished with the delayed addition of a portion of Al-alkyl catalytic component.

Example 13

A) Continuous reference polymerization

Into the vessel (10) with 5 l capacity (see attached Fig. 2), provided with stirrer and heat exchange system, under nitrogen atmosphere, through the line (22):
- 220 g (0.62 mol) of neodymium oxide $(Nd_2O_3)$ at 95%;
- 945 g (3.9 mol) of naphthenic acid, with acidity number 230;
- 180 g (1.9 mol) of tert.butyl chloride at 98%;

- 2.8 kg of vaseline oil;
- 10 ml of aqueous solution of HCl at 37% by weight,

are charged.

The mixture is kept stirred inside the vessel (10), under nitrogen atmosphere, at the temperature of 60°C, for 3 hours. At the end of this time period, a mixture having the appearance of an oil is obtained.

The so obtained mixture is charged, by the line (24), into the vessel (12), of 120 l of capacity, provided with stirrer. Into the vessel (12), through the line (26), also 50 l are charged of a solution containing 0.8 mol/l of aluminium diisobutyl monohydride in vaseline oil.

The mass is kept stirred under nitrogen at room temperature (about 20°C), for 2 hours.

At the end of this time period, a catalytic solution is obtained having the following concentrations, referred to neodymium, aluminium and chlorine:

- neodymium: 0.023 moles/l
- aluminium: 0.74 moles/l
- chlorine: 0.034 moles/l.

So, the chlorine/neodymium ratio results equal to about 1.5/1, and the aluminium/neodymium ration results equal to about 32/1 by mole.

The catalytic solution is drawn from the vessel (12), by the line (28), at the flow rate of 330 ml/hour and is mixed with liquid and anhydrous butadiene, outcoming from the line (30), at the flow rate of 36 l/hour.

Said butadiene outcomes partly from the fresh butadiene drying section (not shown) through the line (32) (about 14 l/hour), and partly from the recycle from reactor (16), through the line (34) (about 22 l/hour), after prior condensation in (36).

Butadiene and the catalytic solution are conveyed through the line (38) to the mixer (14), provided with stirrer, of 1.5 l of capacity. The mixing temperature is of about 30°C.

The mixture leaving the mixer (14) is supplied through the line (40) to the polymerization reactor (16). The reactor (16) is a self-cleaning screw-type reactor, with a total volume of 23 l and with a useful volume of 16 l, into which the polymerization mixture flows with a movement of plug-flow type. The operational conditions inside reactor (16) are: pressure 6.7 bar, inlet temperature about 60°C, and outlet temperature about 90°C.

The polymerization heat is removed by partial evaporation of butadiene, which is drawn through the line (34) and recycled, after preliminary condensation in condenser (36).

Under these conditions, from reactor (16) a mixture containing about 70% by weight of polymer is discharged, and is supplied to the screw device (18), to which water is fed by the line (42), at the rate of 150 ml/hour. In a more downstream point of device (18), by the line (44) and at the flow rate of 300 ml/h a solution containing 100 g.l of a conventional antioxidizer is vaseline oil is supplied.

The so-treated mass is conveyed, for the elimination of volatile components, to the device (20), wherein, at the temperature of 130°C and under the atmospheric pressure, residual butadiene and water, which are sent to the reaction of butadiene recovery (not shown) through the line (46), ae removed.

From device (20), through the line (48) about 6 kg/h are recovered of polybutadiene having average Mooney viscosity of 40. The instantaneous values of Mooney viscosity are variable, and ocmprised within a range of ± 15 points.


B) Continuous polymerization according to the invention

By the procedure as disclosed under part A), a catalytic solution having the following concentrations:

- neodymium 0.023 moles/l
- aluminium 0.57 moles/l
- chlorine 0.034 moles/l

is prepared.

The atomic chlorine/neodymium results hence of about 1.5/1, and aluminium/neodymium ratio of about 25/1. By operating in a way similar to previous part A), to the mixer (14) 330 ml/h of the catalytic mixture and 36 l/h of anhydrous liquid butadiene are fed.

The operating conditions of the polymerization reactor (16) are the same as of part A), but the fact that about to the central area of the reactor, through the line (50), 105 ml/h are fed of a solution containing 0.5 mol/l of aluminium diisobutyl monohydride in vaseline oil. By so doing, the Al/Nd ratio is increased from 25/1 to 32/1, by mole.

The device (18) and the device (20) operate in a way similar as shown under part A).

Through the line (48), about 6 kg/h of polybutadiene having an average Mooney viscosity of 37, with oscillations comprised within the range of ± 2 points, are discharged.

Example 14

A. Preparation of the catalyst

Into a glass bottle with heavy walls, of about 100 ml of capacity, a 12×55 mm teflon-coated magnetic anchor is introduced, then in the order:

| | |
|---|---|
| Naphthenic acids (acidity number = 200) | 19.8 g |
| $Nd_2O_3$ (95%) | 4.04 g |
| Tert.butyl chloride | 4.25 mL |
| Hexane | 45.0 ml |

are charged.

The bottle is capped with a crown cap provided with a bore and tightly sealing neoprene gasket, and is transferred into a temperature-controlled bath kept at 80°C. The anchor is kept vigorously whirled by means of a rotary magnet. After 5 minutes, by means of a microsyringe, and through the rubber gasket, 0.08 ml of HCl in aqueous solution at 37% (Carlo Erba) are added.

After about 80 minutes, the colour of the suspension turns from grayish into nut-brown.

The reaction is continued at 80°C over a total of 3 hours.

The resulting thick solution, titrated after 3 hours of rest at room temperature, supplies a Nd content of 0.343 mol/l.

It is slowly transferred, over a time of about 5 minutes, into a glass flask wherein 524 ml have alreaddy been prepared of 1.04 molar solution of $(i.Bu)_2AlH$ in hexane under mechanical stirring, priorily introduced into the flask under a dry $N_2$ atmosphere.

The so obtained solution is kept twentyfour hours at room temperature before being used. From the elemental analysis the following concentration result:

| | | |
|---|---|---|
| Nd | 0.0393 | moles/l |
| Al | 0.908 | " |
| Cl | 0.058 | " |

Al/Nd 23 and Cl/Nd 1.5 (by g.atoms).

B. Polymerization of butadiene - Reference Tests

B1. Into a glass reactor having the shape of a long cup, with steel head provided with outlets with valve, of the capacity of about 700 ml, already before its sealing a teflon-coated magnetic anchor is introduced.

Into the sealed reactor and under a dry $N_2$ atmosphere, 360 ml (237.6 g) of anhydrous hexane are introduced by siphoning.

Into it 80 g butadiene and 1.33 ml of the previously prepared catalytic solution are then introduced. The reactor is immediately dipped in water thermostatic bath, already isothermed at the temperature of 60°C, and the magnetic anchor contained in it is made rapidly whirl by means of an outer rotary magnet.

The temperature of the reaction mass, thanks also to the polymerization heat, reaches rapidly 60°C. The reaction is continued for 120 minutes, and is then stopped by the introduction of 2 ml of ethyl alcohol diluted with 10 ml of hexane.

The polymeric product is recovered by pouring its solution into an excess (1.5 l) of ethanol containing about 250 mg of antioxidizer AO 2246. After drying, 46.6 g of polymer, corresponding to a conversion of 58.2%, are weighed.

The Mooney viscosity of the product has not resulted measurable at $100°$C in $1+4$ min., it being probably higher than 100.

B2. Inside a reactor similar to that disclosed under B1 a polymerization test analogous to the foregoing is carried out, with the only exception of the addition of 1.15 ml of 1.04 molar solution of $(iBu)_2AlH$, such as to double the amount of Al present in the catalyst (Al/Nd from 23 up to about 46, by moles).

After 120 minutes of polymerization at $60°$C, the following results are obtained:

polymer: 56.6 g (conversion 70.75%)

Mooney viscosity $(1+4, 100°$C): 42.

## C. Polymerization of butadiene according to the invention

Inside the same equipment as hereinabove disclosed for the reference B tests, a polymerization of butadiene analogous to the B1, i.e., by using monomer and catalyst in the same amounts and at the same temperature, is carried out, with the difference that during the progress of the reaction, three aliquots are added, of 0.38 ml each one of 1.04 molar solution of $(iBu)_2AlH$, after 30, 60 and 90 minutes, respectively, from the beginning of the test, such as to increase the Al/Nd ratio from its initial value of 23, up to 46.

By interrupting the test after 120 minutes, the following results are obtained:

dry polymer: 55 g (conversion 68.75%)

Mooney viscosity $(1+4, 100°$C): 17.

## Example 15

## A. Polymerization of butadiene according to the invention

A test of polymerization like that disclosed under C, Example 14, is carried out, with the difference that the aliquots of 1.04 M solutions of DIBAH introduced during the reaction time are of 0.2 ml each, and that the introduction times are the 20th, 40th and 60th minutes from the beginning. In this way, the initial Al/Nd ratio, which is 23, is increased up to about 38. After 120 minutes of polymerization, 50.5 g of dry product are obtained (conversion 63.1%), with Mooney viscosity $(1+4, 100°$C) of 23.5.

## B. Comparative polymerization

A test similar to the one just disclosed (see under A.), but wherein all Al-alkyl is introduced from the beginning, yields the following results:

dry polybutadiene: 48.4 g (conversion 60.5%)

ML $1+4, 100°$C): 40.

## Claims

1. A process for the preparation of a homopolymer of butadiene, or a copolymer of butadiene with other conjugated diolefins, said homopolymer and said copolymers having a high content of 1,4-cis units, using a catalytic system consisting of:(a) at least one neodymium compound selected from neodymium oxide, neodymium alkoxides, phenates and carboxylates or mixtures thereof with compounds of other rare-earth elements; (b) at least one hydroxyl-group- or carboxyl-group-containing organic compound, optionally with water; (c) at least one non-halogenated organometallic aluminium compound having the formula: $R^a R^b AlR^c$, wherein $R^a$ and $R^b$, equal to, or different from one another, are a saturated hydrocarbon radical , and $R^c$ is hydrogen or a hydrocarbon radical equal to, or different from $R^a$ and $R^b$ , or a hydride of said non-halogenated organometallic aluminium compound, and (d) at least one halogenated compound selected from secondary alkyl halides, tertiary alkyl halides, halides of organic acids, metal halides, organometallic halides, hydrogen halides and halogens, characterized in that it comprises the steps of initiating the polymerization reaction with an Al/Nd molar ratio of from 10:1 to 30:1, and adding a portion of component (c) during the polymerization reaction.

2. Process according to claim 1, further comprising the steps of adding the component (c) during the polymerization reaction until the Al/Nd molar ratio is from 20:1 to 80:1.

## Revendications

1. Procédé de préparation d'un homopolymère de butadiène ou d'un copolymère de butadiène avec d'autres dioléfines conjuguées, ledit homopolymère et lesdits copolymères présentant une teneur élevée en motifs cis 1-4, procédé dans lequel on utilise un système catalytique constitué de : (a) au moins un dérivé du néodyme choisi parmi l'oxyde de néodyme, les alcoolates, phénates et carboxylates de néodyme, ou les mélanges de ces composés avec des dérivés d'autres éléments des terres rares, (b) au moins un composé organique à groupe hydroxyle ou à groupe carboxyle, éventuellement avec de l'eau, (c) au moins un dérivé organométallique non-halogéné de l'aluminium, répondant à la formule $R^aR^bAlR^c$, dans laquelle $R^a$ et $R^b$ sont identiques ou différents et représentent un radical hydrocarboné saturé, et $R^c$ est un atome d'hydrogène ou un radical hydrocarboné identique à ou différent de $R^a$ et $R^b$, ou un hydrure dudit dérivé organométallique non-halogéné d'aluminium, et (d) au moins un composé halogéné choisi parmi les halogénures d'alkyle secondaires, les halogénures d'alkyle tertiaires, les halogénures d'acides organiques, les halogénures de métal, les halogénures organométalliques, les acides halogénhydriques et les halogènes, caractérisé en ce qu'il comprend les étapes d'amorçage de la réaction de polymérisation avec un rapport molaire Al/Nd de 10:1 à 30:1, et d'addition d'une partie du composant (c) pendant la réaction de polymérisation.

2. Procédé selon la revendication 1, comprenant en outre l'étape d'addition du composant (c) pendant la réaction de polymérisation jusqu'à ce que le rapport molaire Al/Nd soit de 20:1 à 80:1.

## Ansprüche

1. Verfahren zur Herstellung eines Homopolymers von Butadien oder eines Copolymers von Butadien mit anderen konjugierten Diolefinen, welches Homopolymer und welche Copolymere einen hohen Gehalt an 1,4-cis-Einheiten besitzen, unter Verwendung eines katalytischen Systems bestehend aus:
   (a) mindestens einer Neodymverbindung, ausgewählt unter Neodymoxid, Neodymalkoxiden, -phenaten und -carboxylaten oder Gemischen hievon mit Verbindungen anderer Seltenerdelemente;
   (b) mindestens einer Hydroxylgruppen- oder Carboxylgruppen enthaltenden organischen Verbindung, wahlweise mit Wasser;
   (c) mindestens einer nicht-halogenierten organo-metallischen Aluminiumverbindung der Formel $R^aR^bAlR^c$, worin $R^a$ und $R^b$, welche gleich oder voneinander verschieden sind, einen gesättigten Kohlenwasserstoffrest darstellen und $R^c$ Wasserstoff oder einen Kohlenwasserstoffrest gleich oder verschieden von $R^a$ und $R^b$ darstellt, oder einem Hydrid der genannten nicht-halogenierten organo-metallischen Aluminiumverbindung, und
   (d) mindestens einer helogenierten Verbindung, ausgewählt unter sekundären Alkylhalogeniden, tertiären Alkylhalogeniden, organischen Säurehalogeniden, Metallhalogeniden, organo-metallischen Halogeniden, Wasserstoffhalogeniden und Halogenen,
   dadurch gekennzeichnet, daß es die Schritte der Initiierung der Polymerisationsreaktion mit einem Al/Nd-Molverhältnis von 10:1 bis 30:1 und das Zusetzen von einem Teil der Komponente (c) während der Polymerisationsreaktion umfaßt.

2. Verfahren nach Anspruch 1, welches ferner die Schritte des Zusetzens der Komponente (c) während der Polymerisationsreaktion bis zum Erreichen eines Al/Nd-Molverhältnisses von 20:1 bis 80:1 umfaßt.

Fig.1

Fig.2